# EUROPÄISCHE PATENTSCHRIFT

(11) **EP 3 309 124 B1**
(45) Veröffentlichungstag und Bekanntmachung des Hinweises auf die Patenterteilung: **15.04.2020**
(21) Anmeldenummer: 17195191.6
(22) Anmeldetag: 06.10.2017
(51) Int. Cl.: C01B 21/26, C01B 21/28, B01D 53/86, C01B 21/38

(54) **VERFAHREN UND ANLAGE ZUR HERSTELLUNG VON SALPETERSÄURE**
PROCESS AND PLANT FOR PREPARING NITRIC ACID
PROCÉDÉ ET INSTALLATION DE FABRICATION D'ACIDE NITRIQUE

(30) Priorität: 17.10.2016 DE 102016220184
(43) Veröffentlichungstag der Anmeldung: 18.04.2018
(73) Patentinhaber: thyssenkrupp Industrial Solutions AG, 45143 Essen (DE); thyssenkrupp AG, 45143 Essen (DE)
(72) Erfinder: BIRKE, Daniel, 49326 Melle (DE)
(74) Vertreter: thyssenkrupp Intellectual Property GmbH

(56) Entgegenhaltungen:
- WO-A1-2014/139678
- WO-A2-2005/082779
- DE-T2- 69 304 318
- US-A- 3 991 167

## Beschreibung

Die vorliegende Erfindung betrifft ein Verfahren zur Herstellung von Salpetersäure, bei dem zunächst durch Verdampfung von Ammoniak in mindestens einem ersten Ammoniakverdampfer ein Ammoniakgas erzeugt wird, dieses Ammoniakgas in einer Salpetersäureanlage zu Stickstoffdioxid oxidiert wird und das Stickstoffdioxid danach zur Erzeugung von Salpetersäure in Wasser absorbiert wird, wobei ein nitrose Gase haltiges Restgas aus der Salpetersäureanlage abgeführt und einer Restgasreinigungsvorrichtung zugeleitet wird und in der Restgasreinigungsvorrichtung das nitrose Gase haltige Restgas mit Hilfe von Ammoniak reduziert wird. Gegenstand der vorliegenden Erfindung ist weiterhin eine Anlage zur Herstellung von Salpetersäure nach dem vorgenannten Verfahren.

Zur Herstellung von Salpetersäure wird Ammoniak beispielsweise an Platinnetzen zu Stickstoffmonoxid oxidiert und im folgenden Prozess durch (Luft-)-Sauerstoff zu Stickstoffdioxid aufoxidiert. Das Stickstoffdioxid wird im Laufe des Prozesses heruntergekühlt und in einem Absorber im Gegenstrom in Wasser absorbiert, wodurch Salpetersäure entsteht.

Hierzu wird Ammoniak im Ammoniakverdampfer verdampft und stromaufwärts des Oxidationsreaktors mit Prozessluft gemischt. Da das genutzte Ammoniak nicht zu 100 % aus Ammoniak besteht, sondern in der Regel einen Wasseranteil von meist in der Größenordnung von etwa 0,2% bis etwa 0,5 % aufweist, reichert sich Wasser im Ammoniakverdampfer an. Dies führt zu einem Druckabfall im Ammoniakverdampfer, wodurch der benötigte Druck für die Zuspeisung zur Prozessluft abnimmt.

Um den Druck im Ammoniakverdampfer zu erhöhen, muss das Wasser ausgeschleust werden. Die Ausschleusung des Wassers erfolgt nach dem Stand der Technik durch kontinuierliches oder diskontinuierliches Drainieren/Abschlämmen von Ammoniak aus dem Ammoniakverdampfer in den Ammoniakstripper. Dabei wird prozessbedingt nicht nur Wasser, sondern auch Ammoniak in den Ammoniakstripper drainiert/abgeschlämmt. Der Ammoniakgehalt der Flüssigkeit, die vom Ammoniakverdampfer in den Ammoniakstripper drainiert wird, liegt in der Regel zwischen etwa 60 % und etwa 100 %. Im Ammoniakstripper wird nun das Ammoniak mit Dampf aus dem Wasser-Ammoniakgemisch herausgestrippt und dem Prozess zugeführt. Der Ammoniakstripper arbeitet unter nahezu dem gleichen Druck wie der Ammoniakverdampfer. Übrig bleibt eine Lösung, die aus mehr als ca. 80 % Wasser besteht. Der Rest ist Ammoniak. Diese Flüssigkeit (Wasser-Ammoniak-Gemisch) wird nach dem Stripvorgang in eine atmosphärische "Knock-out-drum" gefördert. In der atmosphärischen Knock-out-drum verdampft wieder ein Teil des Ammoniaks, aufgrund des niedrigeren Druckniveaus im Vergleich zum Ammoniakstripper, welches über einen Kamin der Atmosphäre zugeführt wird. Anschließend wird das leicht ammoniakhaltige Wasser aus der Knock-out-drum einem Entsorgungsbehälter oder einer Abwasserreinigung zugeführt. Das ammoniakhaltige Wasser muss entsprechend den Umweltschutzbedingungen entsorgt werden. Dies geschieht beispielsweise durch die Zuführung des Entsorgungsbehälters in eine Müllverbrennungsanlage.

Da der Absorber einer Salpetersäureanlage die nitrosen Gase nicht zu 100 % absorbiert, befinden sich im Restgas einer Salpetersäureanlage immer nitrose Gase. Diese werden in der Regel einer Restgasreinigung zugeführt. Als Restgasreinigung wird üblicherweise ein DeNOx- oder ein EnviNOx®-System verwendet. Für die katalytische Reaktion zur Reduzierung der nitrosen Gase im Restgasreaktor (DeNOx oder EnviNOx®) wird Ammoniak benötigt. Dies wird in der Regel parallel zur prozessseitigen Ammoniakverdampfung einem Ammoniakverdampfer für die Restgasreinigung zugeführt und dort verdampft, bevor es dem Restgasstrom oder der Restgasreinigung zugegeben wird.

Die Aufgabe der vorliegenden Erfindung besteht darin, ein Verfahren zur Herstellung von Salpetersäure mit den Merkmalen der eingangs genannten Gattung zur Verfügung zu stellen, bei dem kein aus dem System abzuführendes ammoniakhaltiges Abwasser mehr anfällt, bzw. die Menge an ammoniakhaltigem Abwasser zumindest wesentlich reduziert wird.

Als Dokumente, die solche oder ähnliche Technologien beschreiben, können beispielsweise DE 693 04 318 T2; US 3,991,167; WO 2005/082779 A2 und WO 2014/139678 A1 genannt werden.

Die Lösung dieser Aufgabe liefert ein erfindungsgemäßes Verfahren zur Herstellung von Salpetersäure mit den Merkmalen des Anspruchs 1.

Erfindungsgemäß ist vorgesehen, dass in mindestens einem ersten Ammoniakverdampfer oder anderweitig anfallendes ammoniakhaltiges Abwasser der Restgasreinigungsvorrichtung zugeleitet wird. An dieser Stelle können ein, zwei oder mehrere erste Ammoniakverdampfer verwendet werden, die beispielsweise hintereinander angeordnet sind. Das ammoniakhaltige Abwasser verbleibt so im System und der in diesem Abwasserstrom enthaltene Ammoniakanteil kann in der Restgasreinigungsvorrichtung der Salpetersäureanlage zur Reduzierung der dort anfallenden nitrosen Gase eingesetzt werden.

Mit dem Begriff "anderweitig" anfallendes ammoniakhaltiges Abwasser ist gemeint, dass man auch ammoniakhaltiges Abwasser, welches außerhalb des Systems der Anlage anfällt, d.h. in einer anderen Anlage, beispielsweise einer Ammoniumnitratanlage oder dergleichen, in das System einspeisen und der Restgasreinigungsvorrichtung der Salpetersäureanlage zuführen kann.

Anders als bei herkömmlichen Anlagen wird das Ammoniak aus dem mindestens einen ersten Ammoniakverdampfer nicht zunächst einem Ammoniakstripper zugeführt und das gestrippte Ammoniakwasser dann aus dem System abgeführt, sondern das ammoniakhaltige Abwasser wird der Abgasreinigung einer Salpetersäureanlage zugeführt. Dies kann bei Eindruckanlagen (Mitteldruckverfahren, Hochdruckverfahren, atmosphärisches Verfahren) direkt erfolgen oder unter Zuhilfenahme einer Pumpe. Beim Zweidruckverfahren wird bevorzugt der Druck des Ammoniaks aus dem Ammoniakverdampfer beispielsweise mittels einer Pumpe oder über andere geeignete verfahrenstechnische Mittel auf den benötigten Druck für die Restgasreinigung erhöht und dann einem weiteren Ammoniakverdampfer für die Restgasreinigung zugeführt. In der Restgasreinigung dient das Ammoniak als Reduktionsmittel für die nitrosen Gase und wird dabei abgebaut.

Gemäß einer bevorzugten Weiterbildung der vorliegenden Erfindung wird das ammoniakhaltige Abwasser entweder einer Leitung stromaufwärts der Restgasreinigungsvorrichtung oder der Restgasreinigungsvorrichtung direkt zugeführt wird.

Vorzugsweise wird das ammoniakhaltige Abwasser aus dem mindestens einen ersten Ammoniakverdampfer mindestens einem weiteren Ammoniakverdampfer zugeführt, dort verdampft und als Ammoniakgas stromaufwärts der Restgasreinigungsvorrichtung oder der Restgasreinigungsvorrichtung direkt zugeführt.

Wie bereits erwähnt wird das ammoniakhaltige Abwasser aus dem mindestens einen ersten Ammoniakverdampfer insbesondere bei Zweidruckverfahren mittels einer Pumpe oder über andere verfahrenstechnisch geeignete Mittel zur Restgasreinigungsvorrichtung gefördert und/oder auf einen erhöhten Druck gebracht, bevor es der Restgasreinigungsvorrichtung zugeführt wird.

Gemäß einer möglichen Variante des erfindungsgemäßen Verfahrens kann auch das ammoniakhaltige Abwasser aus dem mindestens einen ersten Ammoniakverdampfer zunächst einem Ammoniakstripper zugeführt werden, in dem ein Teil gasförmiges Ammoniak abgetrennt wird, welches der Salpetersäureanlage zugeführt wird, wobei das Abwasser aus dem Ammoniakstripper einem weiteren Ammoniakverdampfer zugeführt, dort verdampft und als Ammoniakgas der Restgasreinigungsvorrichtung zugeführt wird. Bei dieser Variante besteht somit der Vorteil, dass in dem ammoniakhaltigen Abwasser enthaltenes Ammoniak nach Abtrennung im Ammoniakstripper als Edukt der Salpetersäureanlage zugeführt werden kann, wodurch sich eine höhere Verfahrensausbeute erzielen lässt. Anstelle eines kann man auch mehrere Ammoniakstripper verwenden, die man beispielsweise hintereinanderschaltet.

Auch bei dieser Variante kann gegebenenfalls ohne Einsatz einer Pumpe gearbeitet werden. Handelt es sich jedoch beispielsweise um ein Zweidruckverfahren, ist es wiederum von Vorteil, wenn das ammoniakhaltige Abwasser aus dem Ammoniakstripper mittels einer Pumpe zur Restgasreinigungsvorrichtung gefördert und/oder auf einen erhöhten Druck gebracht wird, bevor es der Restgasreinigungsvorrichtung zugeführt wird.

In dem Fall, dass mindestens ein Ammoniakstripper verwendet wird, erhält man zwei ammoniakhaltige Abwasserströme, zum einen denjenigen aus dem mindestens einen ersten Ammoniakverdampfer und zum anderen den Strom von ammoniakhaltigem Abwasser aus dem mindestens einen Ammoniakstripper. In diesem Fall kann man beide Teilströme, nämlich das ammoniakhaltige Abwasser aus dem mindestens einen ersten Ammoniakverdampfer und das ammoniakhaltige Abwasser aus dem mindestens einen Ammoniakstripper zu einem gemeinsamen Strom vereinen und einem weiteren Ammoniakverdampfer zuführen, dort verdampfen und als Ammoniakgas der Restgasreinigungsvorrichtung zuführen. Zusätzlich kann gegebenenfalls in den gemeinsamen Abwasserstrom frisches Ammoniak zugemischt werden.

Weiterhin kann es bei der Variante mit Ammoniakstripper und somit zwei oder mehreren Teilströmen von Vorteil sein, das ammoniakhaltige Abwasser aus dem mindestens einen ersten Ammoniakverdampfer mittels einer ersten Pumpe zu einem weiteren Ammoniakverdampfer zu fördern und/oder auf einen erhöhten Druck zu bringen und das ammoniakhaltige Abwasser aus dem Ammoniakstripper mittels einer weiteren Pumpe zu dem weiteren Ammoniakverdampfer zu fördern und/oder auf einen erhöhten Druck zu bringen, bevor das ammoniakhaltige Abwasser aus dem mindestens einen ersten Ammoniakverdampfer gemeinsam mit dem ammoniakhaltigen Abwasser aus dem Ammoniakstripper und gegebenenfalls frischem Ammoniak der Restgasreinigungsvorrichtung zugeführt wird.

Das erfindungsgemäße Verfahren macht es möglich, die Abwassermenge beispielsweise um mindestens 50 % und maximal um bis zu 100 % zu reduzieren, so dass kein zu entsorgendes ammoniakhaltiges Abwasser mehr anfällt. Das Maß der Reduzierung des Abwassers ist abhängig von der Reinheit des Ammoniaks, das dem Ammoniakverdampfer zugegeben wird.

Ein weiterer Vorteil des Verfahrens besteht darin, dass der Ammoniakverbrauch beim Salpetersäureverfahren reduziert wird, da weniger bzw. kein Ammoniak die Anlage als Abwasser verlässt.

Eine weitere alternative Möglichkeit besteht darin, dass Ammoniak aus dem Ammoniakverdampfer einem Ammoniakstripper zugeführt und die gestrippte Flüssigkeit mit oder ohne Pumpe dem Ammoniakverdampfer der Restgasreinigung und somit einem DeNOx oder EnviNOx®-System zugeführt wird. Dies kann bei Eindruckanlagen (Mitteldruckverfahren, Hochdruckverfahren, atmosphärisches Verfahren) direkt erfolgen oder unter Zuhilfenahme einer Pumpe. Beim Zweidruckverfahren wird der Druck des Ammoniaks aus dem Ammoniakstripper beispielsweise mittels einer Pumpe auf den benötigten Druck erhöht und dem weiteren Ammoniakverdampfer für die Restgasreinigung zugeführt. Das Ammoniak wird in der Restgasreinigung als Reduktionsmittel abgebaut.

Eine weitere alternative Möglichkeit besteht darin, dass Ammoniak aus dem Ammoniakverdampfer einem Ammoniakstripper zugeführt und die gestrippte Flüssigkeit mit oder ohne Pumpe mit dem Ammoniak für den Ammoniakverdampfer der Restgasreinigung vermischt wird und somit einem DeNOx oder EnviNOx®-System zugeführt wird. Dies kann bei Eindruckanlagen (Mitteldruckverfahren, Hochdruckverfahren, atmosphärisches Verfahren) direkt erfolgen oder unter Zuhilfenahme einer Pumpe. Beim Zweidruckverfahren wird der Druck des Ammoniaks aus dem Ammoniakverdampfer mittels einer Pumpe auf den benötigten Druck erhöht und dem Ammoniak für den weiteren Ammoniakverdampfer für die Restgasreinigung zugeführt. Das Ammoniak wird in der Restgasreinigung als Reduktionsmittel abgebaut.

Gegenstand der vorliegenden Erfindung ist weiterhin eine Anlage zur Herstellung von Salpetersäure, umfassend mindestens einen ersten Ammoniakverdampfer, in dem durch Verdampfung von Ammoniak ein Ammoniakgas erzeugt wird, umfassend weiterhin einen Anlagenteil der Salpetersäureanlage, der mit dem mindestens einen ersten Ammoniakverdampfer in Wirkverbindung steht und in der dieses Ammoniakgas beispielsweise an Platinnetzen zu Stickstoffmonoxid und im folgenden Prozess beispielsweise durch (Luft-) Sauerstoff zu Stickstoffdioxid aufoxidiert wird und das Stickstoffdioxid danach zur Erzeugung von Salpetersäure in Wasser absorbiert wird, sowie umfassend eine Restgasreinigungsvorrichtung, die stromabwärts zu dem genannten Anlagenteil der Salpetersäureanlage angeordnet ist und mit diesem in Wirkverbindung steht, der ein nitrose Gase haltiges Restgas aus dem Anlagenteil der Salpetersäureanlage zugeleitet wird und in der das nitrose Gase haltige Restgas mit Hilfe von Ammoniak reduziert wird, wobei eine ausgangsseitig von dem mindestens einen ersten Ammoniakverdampfer ausgehende Leitung für in dem mindestens einen ersten Ammoniakverdampfer anfallendes ammoniakhaltiges Abwasser vorgesehen ist, welche stromaufwärts vor der Restgasreinigungsvorrichtung in eine Leitung zur Restgasreinigungsvorrichtung einmündet oder unmittelbar zur Restgasreinigungsvorrichtung führt.

Die vorgenannte Anlage gemäß der Erfindung hat den Vorteil, dass man das ammoniakhaltige Abwasser, anstatt es aus dem Prozess abzuführen, über die genannte Leitung der Restgasreinigungsvorrichtung zuführen kann.

Vorzugsweise ist gemäß einer Weiterbildung der Erfindung in der Leitung, die in die Leitung zur Restgasreinigung einmündet oder direkt zur Restgasreinigungsvorrichtung führt, wenigstens ein weiterer Ammoniakverdampfer angeordnet. Durch diesen weiteren Ammoniakverdampfer wird das Ammoniak inklusive dem Abwasser verdampft und kann so als Ammoniakgas der Restgasreinigungsvorrichtung zugeleitet werden.

Vorzugsweise ist gemäß einer Weiterbildung der Erfindung in der Leitung stromaufwärts des weiteren Ammoniakverdampfers wenigstens eine Pumpe angeordnet. Eine solche Pumpe oder eine äquivalente verfahrenstechnische Einrichtung ist insbesondere dann von Vorteil, wenn es sich um ein Zweidruckverfahren handelt, so dass das flüssige Ammoniakabwasser und somit das Gas auf den nötigen Druck für die Restgasreinigungsvorrichtung gebracht werden kann.

Vorzugsweise umfasst gemäß einer Weiterbildung der vorliegenden Erfindung die Anlage weiterhin wenigstens einen Ammoniakstripper, welcher im Strömungsweg der Leitung zwischen dem mindestens einen ersten Ammoniakverdampfer und der Restgasreinigungsvorrichtung angeordnet ist. Die darin gestrippte Flüssigkeit kann mit oder ohne Pumpe dem weiteren Ammoniakverdampfer zugeführt und nach Verdampfung als Ammoniakgas der Restgasreinigungsvorrichtung zugeleitet werden.

Vorzugsweise ist gemäß einer Weiterbildung der vorliegenden Erfindung ausgangsseitig von dem mindestens einen ersten Ammoniakverdampfer eine erste Leitung für ammoniakhaltiges Abwasser vorgesehen, die zu dem weiteren Ammoniakverdampfer führt und ausgangsseitig von dem mindestens einen ersten Ammoniakverdampfer ist eine weitere Leitung für ammoniakhaltiges Abwasser vorgesehen, die zu wenigstens einem Ammoniakstripper führt, wobei ausgangsseitig von dem Ammoniakstripper eine Leitung für ammoniakhaltiges Abwasser vorgesehen ist, die zur Restgasreinigungsvorrichtung führt. Diese Variante ermöglicht es, sowohl das ammoniakhaltige Abwasser aus dem ersten Ammoniakverdampfer zu nutzen, als auch das ammoniakhaltige Abwasser, welches den Ammoniakstripper verlässt, wobei man beide Teilströme vereinen, danach vorzugsweise wieder verdampfen und schließlich der Restgasreinigungsvorrichtung zuleiten kann. In einer weiteren Variante kann beispielsweise in den gemeinsamen Abwasserstrom zusätzlich frisches Ammoniak zugemischt werden.

Vorzugsweise münden somit gemäß einer Weiterbildung der vorliegenden Erfindung die Leitung vom mindestens einen ersten Ammoniakverdampfer und die ausgangsseitige Leitung von dem Ammoniakstripper in eine gemeinsame Leitung für ammoniakhaltiges Abwasser ein, die zur Restgasreinigungsvorrichtung führt.

Gegenstand der vorliegenden Erfindung ist weiterhin die Verwendung einer Anlage mit den zuvor beschriebenen Merkmalen in einem erfindungsgemäßen Verfahren zur Herstellung von Salpetersäure.

Nachfolgend wird die vorliegende Erfindung anhand von Ausführungsbeispielen unter Bezugnahme auf die beiliegenden Zeichnungen näher erläutert. Dabei zeigen:
Figur 1 ein Fließschema einer erfindungsgemäßen Anlage gemäß einer ersten beispielhaften Ausführungsvariante;
Figur 2 ein Fließschema einer erfindungsgemäßen Anlage gemäß einer zweiten beispielhaften Ausführungsvariante;
Figur 3 ein Fließschema einer erfindungsgemäßen Anlage gemäß einer dritten beispielhaften Ausführungsvariante.

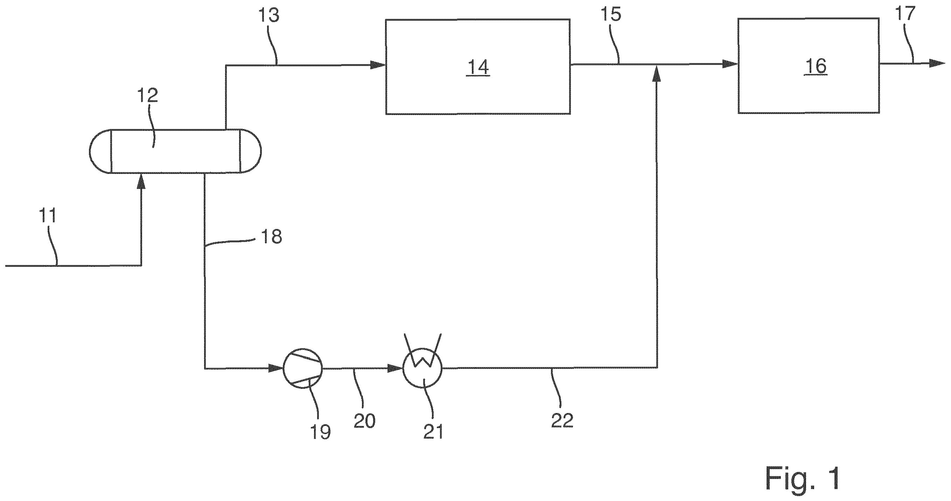

Nachfolgend wird unter Bezugnahme auf Figur 1 ein erstes Ausführungsbeispiel der vorliegenden Erfindung näher erläutert. Flüssiges Ammoniak wird über eine Eingangsleitung 11 in einen Ammoniakverdampfer 12 eingespeist. In diesem Ammoniakverdampfer 12 wird das flüssige Ammoniak verdampft und dann wird über eine von diesem Ammoniakverdampfer 12 ausgangsseitig ausgehende Leitung 13 gasförmiges Ammoniak zu einem weiteren Anlagenteil der Salpetersäureanlage 14 geleitet. In diesem Anlagenteil 14 der Salpetersäureanlage wird das Ammoniak katalytisch zunächst zu Stickstoffmonoxid oxidiert und nachfolgend weiter zu Stickstoffdioxid oxidiert. Das Stickstoffdioxid wird dann in einem Absorber im Gegenstrom in Wasser absorbiert, wodurch Salpetersäure entsteht. Da dieser Prozess der Herstellung von Salpetersäure aus Ammoniak grundsätzlich bekannt ist, wird er hier im Einzelnen nicht näher erläutert.

Da der Absorber der Salpetersäureanlage die nitrosen Gase nicht zu 100 % absorbiert, befinden sich im Restgas der Salpetersäureanlage 14 nitrose Gase. Dieses Restgas wird über eine Leitung 15 einer Restgasreinigungsvorrichtung 16 zugeführt, in der in der Regel die nitrosen Gase im Restgas mit Hilfe von Ammoniak katalytisch reduziert werden. Das gereinigte Restgas kann dann über die Leitung 17 aus dem System abgeführt werden.

Erfindungsgemäß wird ammoniakhaltiges Wasser in flüssigem Aggregatzustand aus dem Ammoniakverdampfer 12 über eine Leitung 18 ausgeschleust und einem weiteren Ammoniakverdampfer 21 zugeführt, wobei in der Leitung 18 optional eine Pumpe 19 angeordnet sein kann, die das Ammoniakwasser über die Leitung 20 dem vorgenannten weiteren Ammoniakverdampfer 21 zuführt. Das in dem weiteren Ammoniakverdampfer 21 verdampfte Ammoniakgas wird dann über eine Leitung 22 abgeleitet, welche in die Leitung 15 einmündet, über die das Restgas von dem Anlagenteil 14 der Salpetersäureanlage der Restgasreinigungsvorrichtung 16 zugeführt wird.

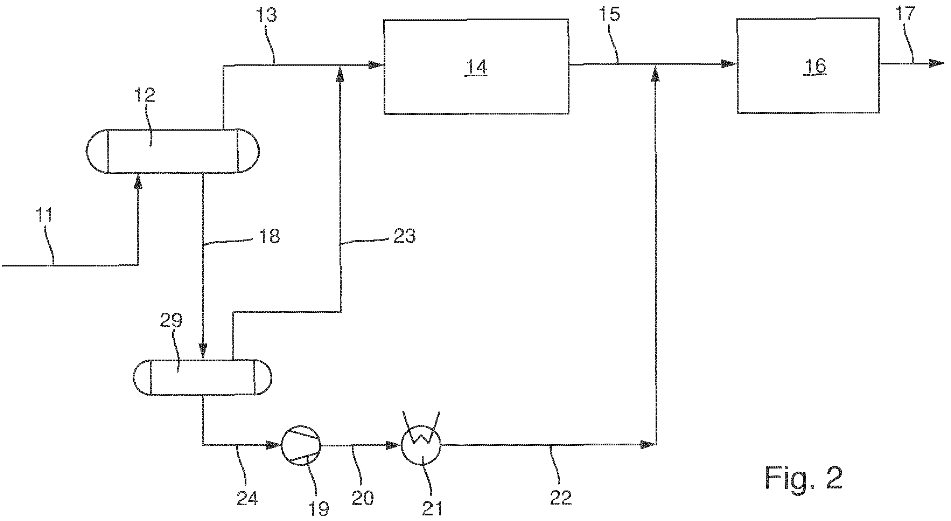

Nachfolgend wird unter Bezugnahme auf die Figur 2 ein zweites Ausführungsbeispiel der vorliegenden Erfindung erläutert. Entsprechende Bauteile, die bereits bei der Variante von Figur 1 zuvor beschrieben wurden, sind in Figur 2 mit den gleichen Bezugszeichen benannt. Dies sind die Eingangsleitung 11, die zum ersten Ammoniakverdampfer 12 führt, die ausgangsseitige Leitung 13 vom diesem Ammoniakverdampfer 12 zu dem Anlagenteil 14 der Salpetersäureanlage und die Leitung 15 von deren Ausgang zur Restgasreinigungsvorrichtung 16.

Die Variante von Figur 2 unterscheidet sich jedoch von derjenigen nach Figur 1 dahingehend, dass die Leitung 18, mittels derer ammoniakhaltiges Abwasser aus dem ersten Ammoniakverdampfer 12 abgeleitet wird, zu einem Ammoniakstripper 29 führt, in dem das ammoniakhaltige Abwasser gestrippt wird. In diesem Ammoniakstripper 29 wird ein Teil Ammoniakgas zurückgewonnen, welches dann über die Leitung 23 der Salpetersäureanlage 14 zugeführt werden kann. Das ammoniakhaltige Abwasser aus dem Ammoniakstripper 29 hingegen wird wiederum über die ausgangsseitige Leitung 24, gegebenenfalls mit Unterstützung einer Pumpe 19 über die Leitung 20 dem weiteren Ammoniakverdampfer 21 zugeführt, von dem aus dann ein Ammoniakgas über die Leitung 22 der Restgasreinigungsvorrichtung 16 zugeführt werden kann.

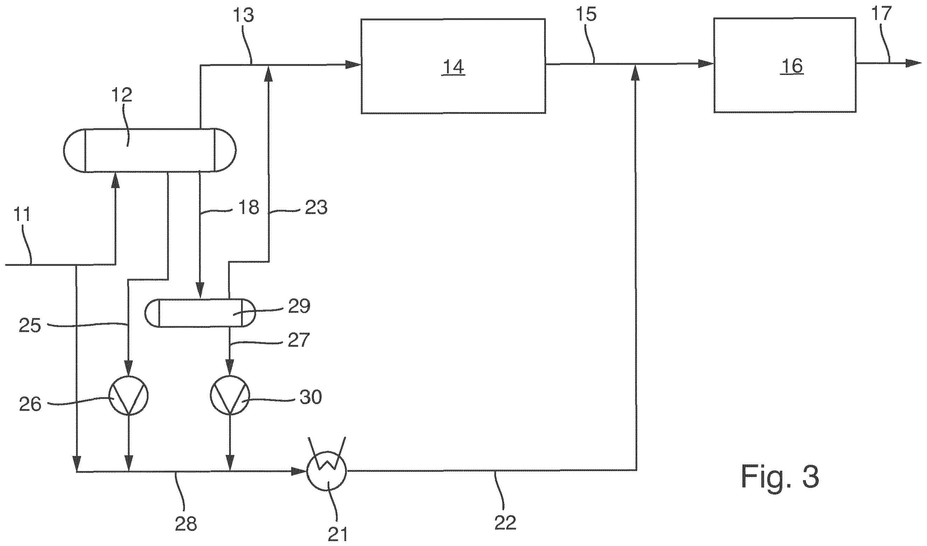

Nachfolgend wird unter Bezugnahme auf die Figur 3 ein drittes Ausführungsbeispiel der vorliegenden Erfindung erläutert. Bei dieser Variante ist ebenso wie bei den zuvor beschriebenen Ausführungsbeispielen ein Ammoniakverdampfer 12 vorhanden, von dem ausgehend das Gas über die Leitung 13 zu dem Anlagenteil 14 der Salpetersäureanlage gelangt. Das Restgas aus der Salpetersäureanlage wird wieder über die Leitung 15 der Restgasreinigungsvorrichtung 16 zugeleitet. Ähnlich wie bei der Variante gemäß Figur 2 ist auch bei der Variante von Figur 3 ein Ammoniakstripper 29 vorgesehen, dem das ammoniakhaltige Abwasser aus dem ersten Ammoniakverdampfer 12 über die Leitung 18 zugeführt wird. Das im Ammoniakstripper 29 gewonnene Ammoniakgas wird über die Leitung 23 dem Salpetersäureprozess zugeführt.

Anders als bei den zuvor beschriebenen Varianten ist bei dem Ausführungsbeispiel gemäß Figur 3 vorgesehen, dass zum einen ausgangsseitig von dem Ammoniakstripper 29 über eine erste Leitung 27 ammoniakhaltiges Abwasserzu dem weiteren Ammoniakverdampfer 21 geleitet wird. Optional wird aber auch ausgangsseitig von dem ersten Ammoniakverdampfer 12 über eine weitere Leitung 25 ein Teilstrom ammoniakhaltiges Abwasser nicht zu dem Ammoniakstripper 29 geführt, sondern an diesem vorbei, wobei gegebenenfalls mit Unterstützung einer weiteren Pumpe 26, dieser Teilstrom einer Leitung 28 zugeleitet wird, die zu dem weiteren Ammoniakverdampfer 21 führt, von welchem dann ausgangsseitig das Ammoniakgas über die Leitung 22, die in die Leitung 15 einmündet, der Restgasreinigungsvorrichtung 16 zugeführt werden kann. Alternativ kann das Ammoniakgas aus der Leitung 22 direkt der Restgasreinigungsvorrichtung 16 zugeführt werden. Somit ergeben sich hier zwei Teilströme an ammoniakhaltigem Abwasser, nämlich einmal über die Leitung 25 vom Ammoniakverdampfer 12 kommend und einmal über die Leitung 27 vom Ammoniakstripper 29 kommend. In der Leitung 27 kann ebenfalls bei Bedarf zur Unterstützung des Fördervorgangs oder zur Erhöhung des Drucks eine Pumpe 30 angeordnet sein. Diese beiden Teilströme über die Leitungen 25 bzw. 27 werden dann in der Leitung 28, in die sie einmünden, zu einem gemeinsamen Strom von ammoniakhaltigem Abwasser vereint, der dann über die Leitung 28 dem weiteren Ammoniakverdampfer 21 zugeführt und dort verdampft wird. Optional kann der Leitung 28 zusätzlich frisches Ammoniak aus der Leitung 11 zu gespeist werden.

### Bezugszeichenliste

- 11: Eingangsleitung
- 12: Ammoniakverdampfer
- 13: ausgangsseitige Leitung Ammoniakverdampfer
- 14: Anlagenteil der Salpetersäureanlage
- 15: Leitung
- 16: Restgasreinigungsvorrichtung
- 17: Leitung
- 18: Leitung
- 19: Pumpe
- 20: Leitung
- 21: Ammoniakverdampfer
- 22: Leitung
- 23: Leitung für Ammoniakgas aus dem Ammoniakstripper
- 24: Leitung vom Ausgang des Ammoniakstrippers zur Pumpe
- 25: Leitung für Teilstrom
- 26: Pumpe
- 27: Leitung für Teilstrom
- 28: Leitung für vereinten Strom zum weiteren Ammoniakverdampfer
- 29: Ammoniakstripper
- 30: Pumpe

## Patentansprüche

1. Verfahren zur Herstellung von Salpetersäure, bei dem zunächst durch Verdampfung von Ammoniak in mindestens einem ersten Ammoniakverdampfer (12) ein Ammoniakgas erzeugt wird, dieses Ammoniakgas in einem Anlagenteil (14) der Salpetersäureanlage zu Stickstoffdioxid oxidiert wird und das Stickstoffdioxid danach zur Erzeugung von Salpetersäure in Wasser absorbiert wird, wobei ein nitrose Gase haltiges Restgas aus dem Anlagenteil (14) der Salpetersäureanlage abgeführt und einer Restgasreinigungsvorrichtung (16) zugeleitet wird und in der Restgasreinigungsvorrichtung (16) das nitrose Gase haltige Restgas mit Hilfe von Ammoniak reduziert wird, **dadurch gekennzeichnet, dass** in dem mindestens einen ersten Ammoniakverdampfer (12) oder anderweitig anfallendes ammoniakhaltiges Abwasser der Restgasreinigungsvorrichtung (16) zugeleitet wird.

2. Verfahren nach Anspruch 1, **dadurch gekennzeichnet, dass** das ammoniakhaltige Abwasser einer Leitung (15) stromaufwärts der Restgasreinigungsvorrichtung (16) oder der Restgasreinigungsvorrichtung (16) direkt zugeführt wird.

3. Verfahren nach Anspruch 1 oder 2, **dadurch gekennzeichnet, dass** ammoniakhaltiges Abwasser aus dem mindestens einen ersten Ammoniakverdampfer (12) mindestens einem weiteren Ammoniakverdampfer (21) zugeführt, dort verdampft und als Ammoniakgas einer Leitung (15) stromaufwärts der Restgasreinigungsvorrichtung (16) oder der Restgasreinigungsvorrichtung (16) zugeführt wird.

4. Verfahren nach einem der Ansprüche 1 bis 3, **dadurch gekennzeichnet, dass** ammoniakhaltiges Abwasser aus dem mindestens einen ersten Ammoniakverdampfer (12) mittels einer Pumpe (19) zur Restgasreinigungsvorrichtung (16) gefördert und/oder auf einen erhöhten Druck gebracht wird, bevor es der Restgasreinigungsvorrichtung (16) zugeführt wird.

5. Verfahren nach einem der Ansprüche 1 bis 3, **dadurch gekennzeichnet, dass** ammoniakhaltiges Abwasser aus dem mindestens einen ersten Ammoniakverdampfer (12) zunächst einem Ammoniakstripper (29) zugeführt wird, in dem ein Teil gasförmiges Ammoniak abgetrennt wird, welches der Salpetersäureanlage (14) zugeführt wird, wobei das Abwasser aus dem Ammoniakstripper (29) einem weiteren Ammoniakverdampfer (21) zugeführt, dort verdampft und als Ammoniakgas der Restgasreinigungsvorrichtung (16) zugeführt wird, insbesondere **dass** ammoniakhaltiges Abwasser aus dem Ammoniakstripper (29) vorzugsweise mittels einer Pumpe (19) zur Restgasreinigungsvorrichtung (16) gefördert und/oder auf einen erhöhten Druck gebracht wird, bevor es der Restgasreinigungsvorrichtung (16) zugeführt wird.

6. Verfahren nach Anspruch 5, **dadurch gekennzeichnet, dass** ammoniakhaltiges Abwasser aus dem mindestens einen ersten Ammoniakverdampfer (12) mit ammoniakhaltigem Abwasser aus dem Ammoniakstripper (29) vereint und einem weiteren Ammoniakverdampfer (21) zugeführt, dort verdampft und als Ammoniakgas der Restgasreinigungsvorrichtung (16) zugeführt wird, insbesondere **dass** das ammoniakhaltige Abwasser aus dem ersten Ammoniakverdampfer (12) mittels einer ersten Pumpe (26) zu einem weiteren Ammoniakverdampfer (21) gefördert und/oder auf einen erhöhten Druck gebracht wird und ammoniakhaltiges Abwasser aus dem Ammoniakstripper (29) mittels einer weiteren Pumpe (30) zu dem weiteren Ammoniakverdampfer (21) gefördert und/oder auf einen erhöhten Druck gebracht wird, bevor das ammoniakhaltige Abwasser aus dem ersten Ammoniakverdampfer (12) gemeinsam mit dem ammoniakhaltiges Abwasser aus dem Ammoniakstripper (29) der Restgasreinigungsvorrichtung (16) zugeführt wird.

7. Verfahren nach einem der Ansprüche 1 bis 6, **dadurch gekennzeichnet, dass** ammoniakhaltiges Abwasser aus einem Bereich außerhalb der Salpetersäureanlage der Restgasreinigungsvorrichtung (16) zugeführt wird.

8. Verfahren nach Anspruch 5, **dadurch gekennzeichnet, dass** ammoniakhaltiges Abwasser aus dem mindestens einen ersten Ammoniakverdampfer (12) mit ammoniakhaltigem Abwasser aus dem Ammoniakstripper (29) sowie mit frischem von außerhalb zugeführten Ammoniak (11) vereint und einem weiteren Ammoniakverdampfer (21) zugeführt, dort verdampft und als Ammoniakgas der Restgasreinigungsvorrichtung (16) zugeführt wird.

9. Verfahren nach einem der Ansprüche 1 bis 8, **dadurch gekennzeichnet, dass** ammoniakhaltiges Abwasser aus dem mindestens einen ersten Ammoniakverdampfer (12) mittels einer ersten Pumpe (26) einem von außerhalb zugeführten frischen Ammoniakstrom (11, 28) zugemischt und zu einem weiteren Ammoniakverdampfer (21) gefördert und/oder auf einen erhöhten Druck gebracht wird und ammoniakhaltiges Abwasser aus einem Ammoniakkstripper (29) mittels einer weiteren Pumpe (30) einem von außerhalb zugeführten frischen Ammoniakstrom (11, 28) zugemischt und zu einem weiteren Ammoniakverdampfer (21) gefördert und/oder auf einen erhöhten Druck gebracht wird, bevor das ammoniakhltige Abwasser aus dem mindestens einen ersten Ammoniakverdampfer (21) gemeinsam mit dem ammoniakhaltigen Abwasser aus dem Ammoniakstripper (29) der Restgasreinigungsvorrichtung (16) zugeführt wird.

10. Anlage zur Herstellung von Salpetersäure, umfassend mindestens einen ersten Ammoniakverdampfer (12), in dem durch Verdampfung von Ammoniak ein Ammoniakgas erzeugt wird, umfassend weiterhin einen Anlagenteil (14) einer Salpetersäureanlage, der mit dem ersten Ammoniakverdampfer (12) in Wirkverbindung steht und in dem dieses Ammoniakgas zu Stickstoffdioxid oxidiert wird und das Stickstoffdioxid danach zur Erzeugung von Salpetersäure in Wasser absorbiert wird, sowie umfassend eine Restgasreinigungsvorrichtung (16), die stromabwärts des Anlagenteils (14) der Salpetersäureanlage angeordnet ist und mit diesem in Wirkverbindung steht, der ein nitrose Gase haltiges Restgas aus dem Anlagenteil (14) der Salpetersäureanlage zugeleitet wird und in der das nitrose Gase haltige Restgas mit Hilfe von Ammoniak reduziert wird, **dadurch gekennzeichnet, dass** mindestens eine ausgangsseitig von dem mindestens einen ersten Ammoniakverdampfer (12) ausgehende Leitung (18) für in dem ersten Ammoniakverdampfer (12) anfallendes ammoniakhaltiges Abwasser vorgesehen ist, welche stromaufwärts vor der Restgasreinigungsvorrichtung (16) in eine Leitung (15) zur Restgasreinigungsvorrichtung (16) einmündet oder unmittelbar zur Restgasreinigungsvorrichtung (16) führt.

11. Anlage nach Anspruch 10, **dadurch gekennzeichnet, dass** in der Leitung (18), die in die Leitung (15) einmündet oder zur Restgasreinigungsvorrichtung (16) führt, wenigstens ein weiterer Ammoniakverdampfer (21) angeordnet ist, insbesondere **dass** in der Leitung (18) stromaufwärts des weiteren Ammoniakverdampfers (21) wenigstens eine Pumpe (19) angeordnet ist.

12. Anlage nach einem der Ansprüche 10 oder 11, **dadurch gekennzeichnet, dass** diese weiterhin wenigstens einen Ammoniakstripper (29) umfasst, welcher im Strömungsweg der Leitung (18) zwischen dem ersten Ammoniakverdampfer (12) und der Restgasreinigungsvorrichtung (16) angeordnet ist, insbesondere **dass** der Ammoniakstripper (29) in der Leitung (18) stromaufwärts einer Pumpe (19) angeordnet ist.

13. Anlage nach Anspruch 12, **dadurch gekennzeichnet, dass** der Ammoniakstripper (29) in der Leitung stromaufwärts des weiteren Ammoniakverdampfers (21) angeordnet ist.

14. Anlage nach einem der Ansprüche 11 bis 13, **dadurch gekennzeichnet, dass** ausgangsseitig von dem mindestens einen ersten Ammoniakverdampfer (12) eine erste Leitung (25) für ammoniakhaltiges Abwasser zu dem weiteren Ammoniakverdampfer (21) führt und ausgangsseitig von dem mindestens einen ersten Ammoniakverdampfer (12) eine weitere Leitung (18) für ammoniakhaltiges Abwasser zu wenigstens einem Ammoniakstripper (29) führt, wobei ausgangsseitig von dem Ammoniakstripper wenigstens eine Leitung (27) für ammoniakhaltiges Abwasser vorgesehen ist, die zur Restgasreinigungsvorrichtung (16) führt, insbesondere **dass** die Leitung (25) von dem mindestens einen ersten Ammoniakverdampfer (12) und die ausgangsseitige Leitung (27) von dem Ammoniakstripper (29) in eine gemeinsame Leitung (28, 22) für ammoniakhaltiges Abwasser einmünden, die zur Restgasreinigungsvorrichtung (16) führt.

15. Verwendung einer Anlage gemäß einem der Ansprüche 10 bis 14 in einem Verfahren zur Herstellung von Salpetersäure gemäß einem der Ansprüche 1 bis 9.

## Claims

1. Process for preparing nitric acid by first vaporizing ammonia in at least one first ammonia vaporizer (12) to produce an ammonia gas, oxidizing this ammonia gas to nitrogen dioxide in a plant section (14) of the nitric acid plant and thereafter absorbing the nitrogen dioxide in water to produce nitric acid, with a residual gas containing nitrous gases being taken off from the plant section (14) of the nitric acid plant and conveyed to a residual-gas cleaning apparatus (16), and the residual gas containing nitrous gases being reduced by means of ammonia in the residual-gas cleaning apparatus (16), **characterized in that** ammonia-containing wastewater obtained in the at least one first ammonia vaporizer (12) or otherwise is conveyed to the residual-gas cleaning apparatus (16).

2. Process according to Claim 1, **characterized in that** the ammonia-containing wastewater is supplied to a line (15) upstream of the residual-gas cleaning apparatus (16) or to the residual-gas cleaning apparatus (16) directly.

3. Process according to Claim 1 or 2, **characterized in that** ammonia-containing wastewater from the at least one first ammonia vaporizer (12) is supplied to at least one further ammonia vaporizer (21), where it is vaporized and supplied as ammonia gas to a line (15) upstream of the residual-gas cleaning apparatus (16) or to the residual-gas cleaning apparatus (16).

4. Process according to any of Claims 1 to 3, **characterized in that** ammonia-containing wastewater from the at least one first ammonia vaporizer (12) is moved by means of a pump (19) to the residual-gas cleaning apparatus (16) and/or brought to an elevated pressure before being supplied to the residual-gas cleaning apparatus (16).

5. Process according to any of Claims 1 to 3, **characterized in that** ammonia-containing wastewater from the at least one first ammonia vaporizer (12) is first supplied to an ammonia stripper (29), in which a portion of gaseous ammonia is removed and is supplied to the nitric acid plant (14), with the wastewater from the ammonia stripper (29) being supplied to a further ammonia vaporizer (21), where it is vaporized and supplied as ammonia gas to the residual-gas cleaning apparatus (16), in particular **in that** ammonia-containing wastewater from the ammonia stripper (29) is preferably moved by means of a pump (19) to the residual-gas cleaning apparatus (16) and/or brought to an elevated pressure before being supplied to the residual-gas cleaning apparatus (16).

6. Process according to Claim 5, **characterized in that** ammonia-containing wastewater from the at least one first ammonia vaporizer (12) is combined with ammonia-containing wastewater from the ammonia stripper (29) and supplied to a further ammonia vaporizer (21), where it is vaporized and supplied as ammonia gas to the residual-gas cleaning apparatus (16), in particular **in that** the ammonia-containing wastewater from the first ammonia vaporizer (12) is moved by means of a first pump (26) to a further ammonia vaporizer (21) and/or brought to an elevated pressure, and ammonia-containing wastewater from the ammonia stripper (29) is moved by means of a further pump (30) to the further ammonia vaporizer (21) and/or brought to an elevated pressure, before the ammonia-containing wastewater from the first ammonia vaporizer (12) is supplied together with the ammonia-containing wastewater from the ammonia stripper (29) to the residual-gas cleaning apparatus (16).

7. Process according to any of Claims 1 to 6, **characterized in that** ammonia-containing wastewater from a region outside the nitric acid plant is supplied to the residual-gas cleaning apparatus (16) .

8. Process according to Claim 5, **characterized in that** ammonia-containing wastewater from the at least one first ammonia vaporizer (12) is combined with ammonia-containing wastewater from the ammonia-stripper (29) and also with fresh ammonia (11) supplied from outside, and supplied to a further ammonia vaporizer (21), where it is vaporized and supplied as ammonia gas to the residual-gas cleaning apparatus (16).

9. Process according to any of Claims 1 to 8, **characterized in that** ammonia-containing wastewater from the at least one first ammonia vaporizer (12) is admixed by means of a first pump (26) to a fresh ammonia stream (11, 28) supplied from outside and is moved to a further ammonia vaporizer (21) and/or brought to an elevated pressure, and ammonia-containing wastewater from an ammonia stripper (29) is admixed by means of a further pump (30) to a fresh ammonia stream (11, 28) supplied from outside and is moved to a further ammonia vaporizer (21) and/or brought to an elevated pressure, before the ammonia-containing wastewater from the at least one first ammonia vaporizer (21) is supplied together with the ammonia-containing wastewater from the ammonia stripper (29) to the residual-gas cleaning apparatus (16).

10. Plant for preparing nitric acid, comprising at least one first ammonia vaporizer (12), in which ammonia is vaporized to produce an ammonia gas, and further comprising a plant section (14) of a nitric acid plant, which is in functional communication with the first ammonia vaporizer (12) and in which this ammonia gas is oxidized to nitrogen dioxide, and the nitrogen dioxide is thereafter absorbed in water to produce nitric acid, and also comprising a residual-gas cleaning apparatus (16) which is disposed downstream of the plant section (14) of the nitric acid plant and is in functional communication therewith, and to which a residual gas containing nitrous gases is conveyed from the plant section (14) of the nitric acid plant, and in which the residual gas containing nitrous gases is reduced by means of ammonia, **characterized in that** there is at least one line (18), originating on the output side from the at least one first ammonia vaporizer (12), which is intended for ammonia-containing wastewater obtained in the first ammonia vaporizer (12) and which opens, upstream before the residual-gas cleaning apparatus (16), into a line (15) to the residual-gas cleaning apparatus (16), or leads directly to the residual-gas cleaning apparatus (16) .

11. Plant according to Claim 10, **characterized in that** at least one further ammonia vaporizer (21) is disposed in the line (18) which opens into the line (15) or leads to the residual-gas cleaning apparatus (16), in particular **in that** at least one pump (19) is disposed in the line (18) upstream of the further ammonia vaporizer (21).

12. Plant according to either of Claims 10 and 11, **characterized in that** it further comprises at least one ammonia stripper (29) which is disposed in the flow path of the line (18) between the first ammonia vaporizer (12) and the residual-gas cleaning apparatus (16), in particular **in that** the ammonia stripper (29) is disposed in the line (18) upstream of a pump (19).

13. Plant according to Claim 12, **characterized in that** the ammonia stripper (29) is disposed in the line upstream of the further ammonia vaporizer (21).

14. Plant according to any of Claims 11 to 13, **characterized in that** on the output side from the at least one first ammonia vaporizer (12), a first line (25) for ammonia-containing wastewater leads to the further ammonia vaporizer (21), and on the output side from the at least one first ammonia vaporizer (12) a further line (18) for ammonia-containing wastewater leads to at least one ammonia stripper (29), with there being, on the output side from the ammonia stripper, at least one line (27) for ammonia-containing wastewater that leads to the residual-gas cleaning apparatus (16), in particular **in that** the line (25) from the at least one first ammonia vaporizer (12) and the output-side line (27) from the ammonia stripper (29) open into a common line (28, 22) for ammonia-containing wastewater that leads to the residual-gas cleaning apparatus (16).

15. Use of a plant according to any of Claims 10 to 14 in a process for preparing nitric acid according to any of Claims 1 to 9.

## Revendications

1. Procédé de fabrication d'acide nitrique, selon lequel un gaz d'ammoniac est tout d'abord formé par évaporation d'ammoniac dans au moins un premier évaporateur d'ammoniac (12), ce gaz d'ammoniac est oxydé dans une partie d'unité (14) de l'unité de production d'acide nitrique en dioxyde d'azote, puis le dioxyde d'azote est absorbé dans de l'eau pour la formation d'acide nitrique, un gaz résiduel contenant des gaz nitreux étant déchargé de la partie d'unité (14) de l'unité de production d'acide nitrique et acheminé dans un dispositif de purification du gaz résiduel (16) et, dans le dispositif de purification du gaz résiduel (16), le gaz résiduel contenant des gaz nitreux étant réduit à l'aide d'ammoniac, **caractérisé en ce que** l'eau résiduaire contenant de l'ammoniac formée dans ledit au moins un premier évaporateur d'ammoniac (12) ou ailleurs est acheminée dans le dispositif de purification du gaz résiduel (16).

2. Procédé selon la revendication 1, **caractérisé en ce que** l'eau résiduaire contenant de l'ammoniac est introduite dans une conduite (15) en amont du dispositif de purification du gaz résiduel (16) ou directement dans le dispositif de purification du gaz résiduel (16).

3. Procédé selon la revendication 1 ou 2, **caractérisé en ce que** l'eau résiduaire contenant de l'ammoniac issue dudit au moins un premier évaporateur d'ammoniac (12) est introduite dans au moins un évaporateur d'ammoniac supplémentaire (21), y est évaporée et est introduite en tant que gaz d'ammoniac dans une conduite (15) en amont du dispositif de purification du gaz résiduel (16) ou dans le dispositif de purification du gaz résiduel (16).

4. Procédé selon l'une quelconque des revendications 1 à 3, **caractérisé en ce que** l'eau résiduaire contenant de l'ammoniac issue dudit au moins un premier évaporateur d'ammoniac (12) est transportée au moyen d'une pompe (19) vers le dispositif de purification du gaz résiduel (16) et/ou portée à une pression plus élevée avant d'être introduite dans le dispositif de purification du gaz résiduel (16).

5. Procédé selon l'une quelconque des revendications 1 à 3, **caractérisé en ce que** l'eau résiduaire contenant de l'ammoniac issue dudit au moins un premier évaporateur d'ammoniac (12) est tout d'abord introduite dans un épuiseur d'ammoniac (29), dans lequel une partie de l'ammoniac gazeux est séparée, qui est introduite dans l'unité de production d'acide nitrique (14), l'eau résiduaire issue de l'épuiseur d'ammoniac (29) étant introduite dans un évaporateur d'ammoniac supplémentaire (21), y étant évaporée et étant introduite en tant que gaz d'ammoniac dans le dispositif de purification du gaz résiduel (16), notamment **en ce que** l'eau résiduaire contenant de l'ammoniac issue de l'épuiseur d'ammoniac (29) est de préférence transportée au moyen d'une pompe (19) vers le dispositif de purification du gaz résiduel (16) et/ou portée à une pression plus élevée avant d'être introduite dans le dispositif de purification du gaz résiduel (16).

6. Procédé selon la revendication 5, **caractérisé en ce que** l'eau résiduaire contenant de l'ammoniac issue dudit au moins un premier évaporateur d'ammoniac (12) est réunie avec l'eau résiduaire contenant de l'ammoniac issue de l'épuiseur d'ammoniac (29) et introduite dans un évaporateur d'ammoniac supplémentaire (21), y est évaporée et est introduite en tant que gaz d'ammoniac dans le dispositif de purification du gaz résiduel (16), notamment **en ce que** l'eau résiduaire contenant de l'ammoniac issue du premier évaporateur d'ammoniac (12) est transportée au moyen d'une première pompe (26) vers un évaporateur d'ammoniac supplémentaire (21) et/ou portée à une pression plus élevée, et l'eau résiduaire contenant de l'ammoniac issue de l'épuiseur d'ammoniac (29) est transportée au moyen d'une pompe supplémentaire (30) vers l'évaporateur d'ammoniac supplémentaire (21) et/ou portée à une pression plus élevée, avant que l'eau résiduaire contenant de l'ammoniac issue du premier évaporateur d'ammoniac (12) ne soit introduite conjointement avec l'eau résiduaire contenant de l'ammoniac issue de l'épuiseur d'ammoniac (29) dans le dispositif de purification du gaz résiduel (16).

7. Procédé selon l'une quelconque des revendications 1 à 6, **caractérisé en ce que** l'eau résiduaire contenant de l'ammoniac est introduite dans le dispositif de purification du gaz résiduel (16) à partir d'une zone à l'extérieur de l'unité de production d'acide nitrique.

8. Procédé selon la revendication 5, **caractérisé en ce que** l'eau résiduaire contenant de l'ammoniac issue dudit au moins un premier évaporateur d'ammoniac (12) est réunie avec l'eau résiduaire contenant de l'ammoniac issue de l'épuiseur d'ammoniac (29), ainsi qu'avec de l'ammoniac frais introduit à partir de l'extérieur (11), et introduite dans un évaporateur d'ammoniac supplémentaire (21), y est évaporée et est introduite en tant que gaz d'ammoniac dans le dispositif de purification du gaz résiduel (16).

9. Procédé selon l'une quelconque des revendications 1 à 8, **caractérisé en ce que** l'eau résiduaire contenant de l'ammoniac issue dudit au moins un premier évaporateur d'ammoniac (12) est mélangée au moyen d'une première pompe (26) avec un courant d'ammoniac frais introduit à partir de l'extérieur (11, 28) et transportée vers un évaporateur d'ammoniac supplémentaire (21) et/ou portée à une pression plus élevée, et l'eau résiduaire contenant de l'ammoniac issue d'un épuiseur d'ammoniac (29) est mélangée au moyen d'une pompe supplémentaire (30) avec un courant d'ammoniac frais introduit à partir de l'extérieur (11, 28) et transportée vers un évaporateur d'ammoniac supplémentaire (21) et/ou portée à une pression plus élevée, avant que l'eau résiduaire contenant de l'ammoniac issue dudit au moins un premier évaporateur d'ammoniac (21) ne soit introduite conjointement avec l'eau résiduaire contenant de l'ammoniac issue de l'épuiseur d'ammoniac (29) dans le dispositif de purification du gaz résiduel (16).

10. Unité pour la fabrication d'acide nitrique, comprenant au moins un premier évaporateur d'ammoniac (12), dans lequel un gaz d'ammoniac est formé par évaporation d'ammoniac, comprenant en outre une partie d'unité (14) d'une unité de production d'acide nitrique, qui est en liaison active avec le premier évaporateur d'ammoniac (12), et dans laquelle ce gaz d'ammoniac est oxydé en dioxyde d'azote, puis le dioxyde d'azote est absorbé dans de l'eau pour la formation d'acide nitrique, et comprenant un dispositif de purification du gaz résiduel (16), qui est agencé en aval de la partie d'unité (14) de l'unité de production d'acide nitrique et est en liaison active avec celle-ci, dans lequel un gaz résiduel contenant des gaz nitreux issu de la partie d'unité (14) de l'unité de production d'acide nitrique est acheminé et dans lequel le gaz résiduel contenant des gaz nitreux est réduit à l'aide d'ammoniac, **caractérisé en ce qu'**au moins une conduite (18) partant du côté de la sortie dudit au moins un premier évaporateur d'ammoniac (12) est prévue pour l'eau résiduaire contenant de l'ammoniac formée dans le premier évaporateur d'ammoniac (12), qui débouche en amont du dispositif de purification du gaz résiduel (16) dans une conduite (15) vers le dispositif de purification du gaz résiduel (16) ou conduit directement vers le dispositif de purification du gaz résiduel (16).

11. Unité selon la revendication 10, **caractérisé en ce que,** dans la conduite (18) qui débouche dans la conduite (15) ou conduit vers le dispositif de purification du gaz résiduel (16), au moins un évaporateur d'ammoniac supplémentaire (21) est agencé, notamment **en ce qu'**au moins une pompe (19) est agencée dans la conduite (18) en amont de l'évaporateur d'ammoniac supplémentaire (21).

12. Unité selon l'une quelconque des revendications 10 ou 11, **caractérisée en ce que** celle-ci comprend en outre au moins un épuiseur d'ammoniac (29), qui est agencé dans la trajectoire d'écoulement de la conduite (18) entre le premier évaporateur d'ammoniac (12) et le dispositif de purification du gaz résiduel (16), notamment **en ce que** l'épuiseur d'ammoniac (29) est agencé dans la conduite (18) en amont d'une pompe (19).

13. Unité selon la revendication 12, **caractérisée en ce que** l'épuiseur d'ammoniac (29) est agencé dans la conduite en amont de l'évaporateur d'ammoniac supplémentaire (21).

14. Unité selon l'une quelconque des revendications 11 à 13, **caractérisée en ce qu'**une première conduite (25) pour l'eau résiduaire contenant de l'ammoniac conduit depuis le côté de la sortie dudit au moins un premier évaporateur d'ammoniac (12) vers l'évaporateur d'ammoniac supplémentaire (21), et une conduite supplémentaire (18) pour l'eau résiduaire contenant de l'ammoniac conduit depuis le côté de la sortie dudit au moins un premier évaporateur d'ammoniac (12) vers au moins un épuiseur d'ammoniac (29), au moins une conduite (27) pour l'eau résiduaire contenant de l'ammoniac étant prévue du côté de la sortie de l'épuiseur d'ammoniac, qui conduit vers le dispositif de purification du gaz résiduel (16), notamment **en ce que** la conduite (25) depuis ledit au moins un premier évaporateur d'ammoniac (12) et la conduite (27) du côté de la sortie de l'épuiseur d'ammoniac (29) débouchent dans une conduite commune (28, 22) pour l'eau résiduaire contenant de l'ammoniac, qui conduit vers le dispositif de purification du gaz résiduel (16).

15. Utilisation d'une unité selon l'une quelconque des revendications 10 à 14 dans un procédé de fabrication d'acide nitrique selon l'une quelconque des revendications 1 à 9.
